# EUROPEAN PATENT APPLICATION

(11) **EP 2 138 702 A1**
(43) Date of publication of application: **30.12.2009**
(21) Application number: 08425450.7
(22) Date of filing: 25.06.2008
(51) Int. Cl.: F02M 35/104, F02B 29/04, F28D 7/10, F28F 1/02

(54) **Intake system for internal combustion engines**

(71) Applicant: Magneti Marelli Powertrain S.p.A., 28011 Corbetta (IT)
(72) Inventor: Bellato, Nazario, 40131 Bologna (IT); Teducci, Assunta, 87022 Cetraro (IT); Tartari, Michele, 40131 Bologna (IT); Davitti, Andrea, 10121 Torino (IT)
(74) Representative: Maccagnan, Matteo

(57) **Abstract**

An intake system (1) for an internal combustion engine (M) provided with an intake manifold (2) and a heat exchanger (3), which is arranged within the intake manifold (2) and is adapted to reduce the temperature of a flow of air which flows through the intake manifold in use.

## Description

### TECHNICAL FIELD

The present invention relates to an intake system for internal combustion engines.

Specifically, the present invention relates to an intake system for an internal combustion engine; the intake system comprises an intake manifold and a heat exchanger adapted to reduce the temperature of an air flow which flows through the intake manifold.

### BACKGROUND ART

In an internal combustion engine, the maximum suppliable power is proportional to the maximum amount of air which is aspirated into each cylinder. In internal combustion engines of the aspirated type, the air which fills each cylinder of the engine is aspirated by effect of the vacuum generated inside the cylinder by the corresponding piston during the intake step.

In order to improve the performances of internal combustion engines, it is known to supercharge the cylinder by means of the forced introduction of air into the cylinders themselves by means of a turbocharger arranged upstream of an intake manifold.

In the engines provided with turbocharger, the so-called turbocharged engines, a turbine is directly connected, by means of a shaft, to a compressor, which is actuated by the exhaust gases and which aspirates the air by compressing it. However, the exhaust gases enter the turbine at very high temperatures, heating by conduction also the compressor which in turn gives heat to the aspirated air; furthermore, the aspirated air is heated also by effect of the compressing action. The consequence of this heating is a reduction of the aspirated air density and, thus, of the volumetric advantages deriving from the compression.

For cooling the aspirated air and thus increasing the density of the aspirated air itself, it is known to insert a heat exchanger, commonly named "intercooler" between the compressor and the intake manifold. Generally, air/air heat exchangers are used, but air/water exchangers exist which are used because much more efficient. The heat exchanger exchanges heat from the aspirated air with that of the external air (air/air exchanger) or with that of a coolant reservoir (air/water exchanger) and by means of a specific cooling circuit reduces the temperature of the air coming from the compressor. In such a manner, the pressure and volume being equal, it is possible to aspirate a greater amount of air, thus improving the global efficiency of the engine in terms of consumption, performances and reliability because some components suffer from less thermal stress.

In modern motor vehicles, particularly those of small size, the total volume of the engine compartment is small, both not to excessively penalize the size of the passenger compartment and for aerodynamic reasons, for which relatively low front parts are required. Furthermore, in the engine compartment, it may be required to accommodate various components which are cumbersome and which do not belong to the engine, such as for example a conditioner, ABS electronic and hydraulic control units, an electronic stability control unit, etc. Therefore, assembling a heat exchanger inside an engine compartment may display serious problems, which are less perceived in the case of large-sized sedans, but are generally very serious in the case of small motor vehicles (e.g. the so-called city cars). Furthermore, if the same motor vehicle can fit either an aspirated engine or a turbocharged engine, two greatly different intake systems must be made for the two engines with a consequent increase in the complexity and in the costs for logistics and assembly of the intake system.

### DISCLOSURE OF INVENTION

It is the object of the present invention to provide an intake system for an internal combustion engine, which is easy and cost-effective to be made, is compact and can be indifferently mounted to both internal combustion engines of the aspirated type and turbocharged internal combustion engines.

According to the present invention, an intake system for internal combustion engines is provided as described in claim 1 and preferably in anyone of the claims either directly or indirectly depending on claim 1.

### BRIEF DESCRIPTION OF THE DRAWINGS

The present invention will now be described with reference to the accompanying drawings, which show a non-limitative embodiment thereof, in which:
- figure 1 is a perspective view of a preferred embodiment of the intake system according to the present invention;
- figure 2 is an exploded perspective view of the intake system in figure 1;
- figure 3 shows the intake system in figure 1 with parts in section and parts removed for clarity;
- figure 4 is a perspective view of a detail in figure 3;
- figure 5 is an exploded perspective view of the detail in figure 4; and
- figure 6 is a section view of the detail in figure 4.

### PREFERRED EMBODIMENTS OF THE INVENTION

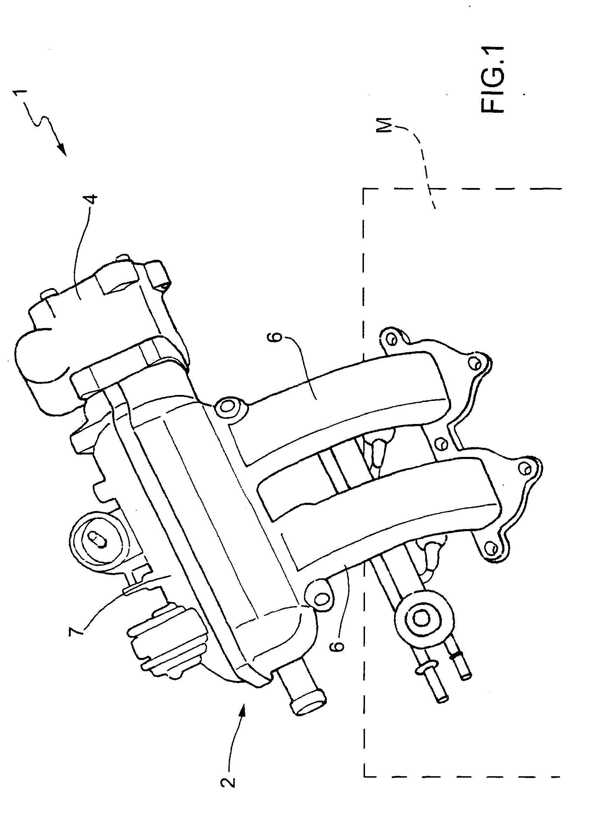

In figure 1, numeral 1 indicates as a whole an intake system for an internal combustion engine M which intake system 1 comprises an intake manifold 2 and a heat exchanger 3 (shown in figures from 2 to 6) generally known as "intercooler".

The intake system 1 receives, through a butterfly valve 4, an air flow from a turbocharger (not shown), and feeds this air flow to the cylinders (not shown) of the engine M, when the corresponding pistons (not shown) are at the intake step.

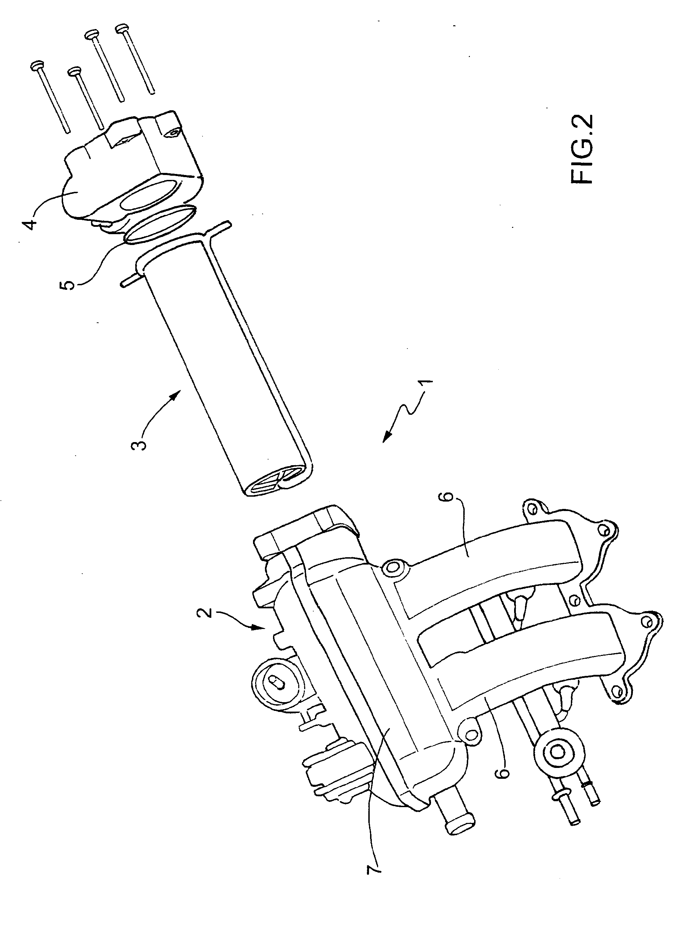

As shown in figure 2, the intake manifold 2 is connected to the butterfly valve 4 with a sealing ring 5 therebetween and comprises a plurality of intake pipes 6, each of which puts the inside of the intake manifold 2 into communication with a corresponding cylinder (not shown).

The intake manifold 2 comprises a body 7 displaying an essentially cylindrical tubular shape; and the flow of aspirated air is conveyed, in use, into the body 7 by means of the butterfly valve 4 and exits from the intake pipes 6.

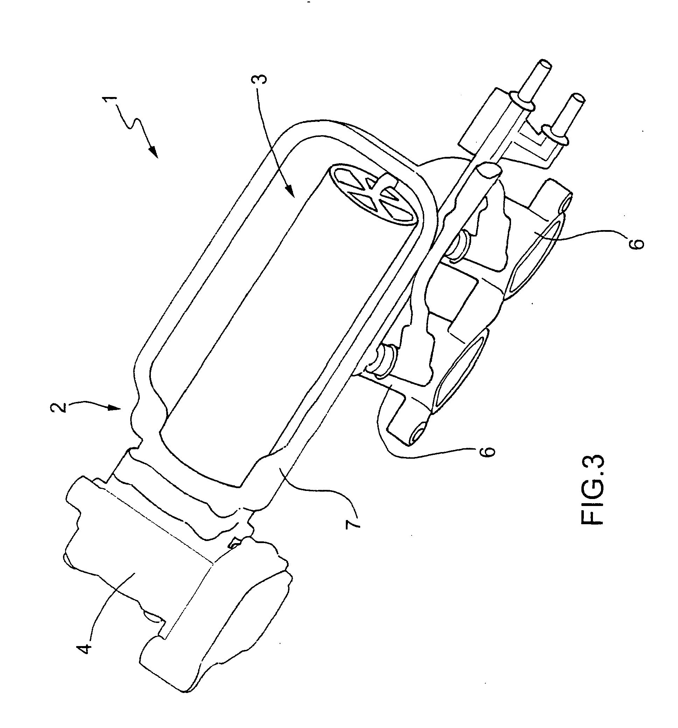

The heat exchanger 3 is adapted to cool the flow of aspirated air and, thus, to increase the density of the aspirated air itself and is arranged, as shown in figure 3, inside the body 7 to optimize the dimensions of the intake system 1.

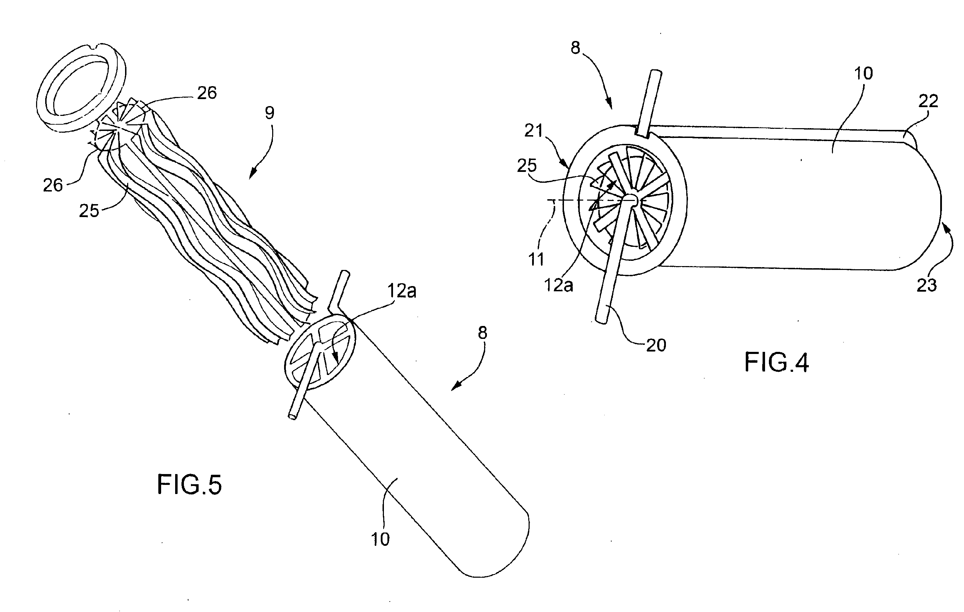

As better shown in figures 4 and 5, the heat exchanger 3 comprises an active cooling device surrounding the flow of aspirated air and defined by a cooling circuit 8 using a coolant, and a passive cooling device immersed in the flow of aspirated air and defined by a conduction radiator 9 adapted to be heated by convection by the aspirated air and to transmit by conduction the absorbed heat to the cooling circuit 8.

The cooling circuit 8 comprises a cylindrical tubular body 10, which extends along an axis 11 parallel to an axis of the body 7, is arranged inside the body 7 itself and displays an internal cylindrical wall 12, defining an aspirated air flow passage pipe 12a, and a cylindrical external wall 13, which reciprocally define a tubular chamber 14 having an annular section which is closed at its axial ends.

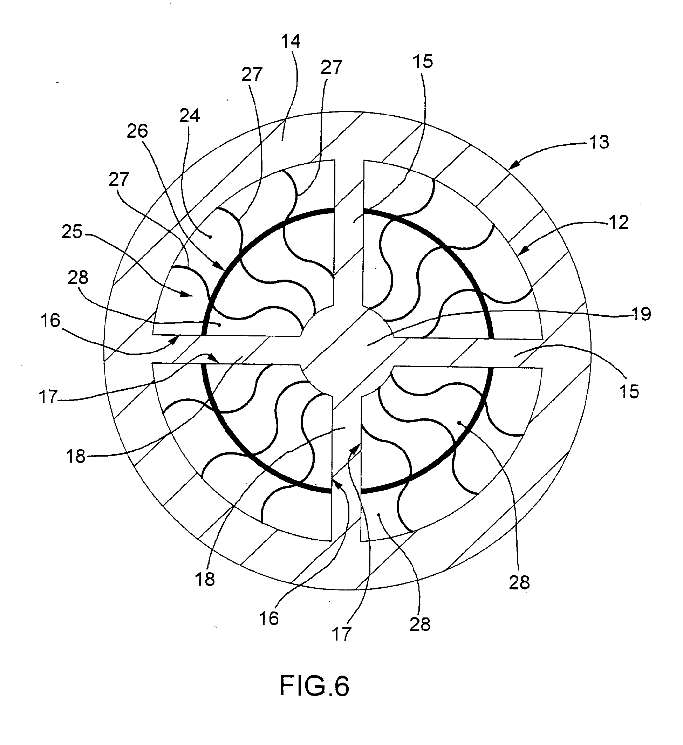

As better shown in figure 6, the cooling circuit 6 further comprises two diametrical partitions 15 arranged as a cross inside the pipe 12a and integrally connected, along the side edges thereof, to the internal surface of the internal cylindrical wall 12. Each partition 15 is defined by two side walls 16 and 17 which are reciprocally parallel and facing each other, and defining a chamber 18 communicating with the other chamber 18 along a central manifold 19 communicating with the chamber 14 along the side edges thereof.

The cooling circuit 8 finally comprises a pipe 20, which is an outlet pipe of the coolant and is connected to an end of the central manifold 19 facing the butterfly valve 4 and arranged at an air inlet end 21 into the pipe 12a, and a pipe 22, which is a feeding pipe of the coolant and is connected to an end of the central manifold 19, which end is opposite to that facing the butterfly valve 4 and is arranged at an air outlet end 23 of the pipe 12a.

The partitions 15 define four flow passages 24 for the aspirated air inside the pipe 12a, each of which accommodates a corresponding portion 25 of the radiator 9.

As shown in figures 5 and 6, each portion 25 of the radiator 9 comprises a cylindrical tube sector 26 of about 90° amplitude, extending over the entire length of the tubular body 10, coaxial to the axis 11, and displaying longitudinal side edges integrally connected to the partitions 15 and a diameter of value equal to approximately half the diameter of the external cylindrical wall 13 of the tubular body 10 so as to divide the corresponding flow passage 24 into two parts displaying sections having a surface essentially equal to each other. Each portion 25 of the radiator 9 further comprises three radial partitions 27, which are further uniformly distributed about the axis 11, extend from the external surface of the central manifold 19 to the internal surface of the internal wall 12 of the tubular body 10 through the corresponding tube sector 26, are integral with the corresponding tube sector 26 and cooperate with the corresponding sector 26 and with the partitions 15 for dividing the corresponding flow passage 24 into eight channels 28 displaying reciprocally and essentially identical hydraulic resistances. The radial partitions 27 are wavy and, thus, also the channels 28 are wavy so as to make the path followed by the aspirated air along the tubular body 10 longer than the axial length of the tubular body 10 itself in order to improve the heat exchange.

In this manner, the aspirated air flow is conveyed into the cylindrical tubular body 10 through the inlet end 21 of the pipe 12a, flows into the channels 28 and exits from the outlet end 23 of the pipe 12a. During its path inside the heat exchanger 3, the flow of aspirated air releases heat by convection both to the cooling circuit 8 and to the radiator 9, which gives, by convection, the accumulated heat to the cooling circuit 8.

It is worth noting that the heat exchanger 3 is a heat exchanger of the back-flow type, because the motion of the two fluids, i.e. of the aspirated air flow and of the coolant, occurs mainly along the same direction, but in different senses.

The above-described intake system 1 displays many advantages because it has a compact structure, it is simple and cost-effective to be made and can be mounted indifferently without adopting particular devices both to an aspirated internal combustion engine and to a turbocharged internal combustion engine.

## Claims

1. An intake system (1) for an internal combustion engine (M); the intake system (1) comprising:
an intake manifold (2); and
a heat exchanger (3) adapted to reduce the temperature of an air flow which flows in use through the intake manifold (2);
and being **characterised in that** the heat exchanger (3) is arranged inside the intake manifold (2).

2. A system according to claim 1, wherein the intake manifold (2) comprises a main body (7), displaying a cylindrical tubular shape, from which a plurality of intake pipes (6) originate, each of which puts the main body (7) into communication with the internal combustion engine (M); the heat exchanger being arranged inside the main body (7).

3. A system according to claim 1 or 2, wherein the heat exchanger (3) comprises an active cooling device (8) using a coolant, and a passive cooling device (9) adapted to adsorb heat from the aspirated air flow and to transmit it to the active cooling device (8).

4. A system according to claim 3, wherein the active cooling device (8) surrounds the aspirated air flow.

5. A system according to claim 3 or 4, wherein the passive cooling device (9) is immersed in the aspirated air flow.

6. A system according to anyone of the claims from 3 to 5, wherein the passive cooling device (9) comprises a conduction radiator (9) adapted to be heated by convection by the aspirated air and to transmit by conduction the absorbed heat to the active cooling device (8).

7. A system according to anyone of the claims from 3 to 6, wherein the active cooling device (8) comprises a cooling circuit (8), in turn comprising a tubular chamber (14) having an annular section, in which the coolant flows in use and which is internally limited by an internal tubular wall (12) defining a flow pipe (12a) for the aspirated air ; the flow pipe (12a) displaying an axis (11) parallel to an axis of the main body (7).

8. A system according to claim 7, wherein the cooling circuit (8) further comprises at least one diametrical partition (15) arranged within the internal tubular wall (12) of the tubular chamber (14); the partition (15) being hollow; displaying longitudinal side edges integral with the internal tubular wall (12); defining, therein, a further chamber (18) communicating with the tubular chamber (14); and dividing the flow pipe (12a) into several flow passages (24) for the aspirated air.

9. A system according to claim 8, wherein the cooling circuit (8) comprises an outlet pipe (20) for the coolant connected to a first end of said further chamber (18) arranged at an inlet end (21) of the flow pipe (12a).

10. A system according to claim 9, wherein the cooling circuit (8) comprises an inlet pipe (22) for the coolant connected to a second end of said further chamber (18) arranged at an outlet end (21) of the flow pipe (12a).

11. A system according to claim 10, wherein each flow passage (24) accommodates a corresponding portion (25) of the radiator (9).

12. A system according to claim 11, wherein each portion (25) comprises a cylindrical tube sector (26), which extends over the entire length of the corresponding flow passage (24), is coaxial to the axis (11) and is integral with the cooling circuit (8).

13. A system according to claim 12, wherein each portion (25) comprises a plurality of radial partitions (27), which are integral with the corresponding tube sector (26) and to the cooling circuit (8) and extend through the corresponding tube sector (26) itself.

14. A system according to claim 13, wherein the radial partitions (27) are wavy.

15. A system according to claim 13 or 14, wherein the radial partitions (27) and the corresponding tube sector (26) divide the corresponding flow passage (24) into a plurality of flow channels (28) for the aspirated air.
